(19) Europäisches Patentamt
European Patent Office
Office européen des brevets

(11) **EP 3 885 022 A1**

(12) **EUROPEAN PATENT APPLICATION**

(43) Date of publication:
**29.09.2021 Bulletin 2021/39**

(51) Int Cl.:
**B01D 35/143** *(2006.01)*  **B01D 46/00** *(2006.01)*

(21) Application number: **20165226.0**

(22) Date of filing: **24.03.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Sensirion AG**
**8712 Stäfa (CH)**

(72) Inventors:
• **MONNIN, Eric**
**8712 Stäfa (CH)**

• **FITZI, Martin**
**8712 Stäfa (CH)**
• **SCHMID, Tobias**
**8712 Stäfa (CH)**
• **GOEDEJOHANN, Johannes**
**8712 Stäfa (CH)**
• **HORNUNG, Mark**
**8712 Stäfa (CH)**

(74) Representative: **Detken, Andreas**
**Isler & Pedrazzini AG**
**Giesshübelstrasse 45**
**Postfach 1772**
**8027 Zürich (CH)**

(54) **MONITORING THE CONDITION OF A FILTER**

(57)     A filter monitoring system for monitoring the condition of a filter (30) comprises a differential pressure sensor (10). A first pressure port (11) of the differential pressure sensor (10) is connected in a fluid-tight manner to the downstream side of the filter (30). A second pressure port (12) of the differential pressure sensor (10) is arranged downstream from the filter (30) without being connected to the filter in a fluid-tight manner. Thereby the differential pressure sensor determines a pressure drop across the filter while being protected from contamination. The pressure drop can be used to monitor the condition of the filter.

FIG. 2

EP 3 885 022 A1

**Description**

TECHNICAL FIELD

The present invention relates to a filter monitoring system and to a method of monitoring the condition of a filter.

PRIOR ART

Filters find widespread use for removing particulate matter from fluids, including gases and liquids. Examples include air filters in HVAC systems in buildings and vehicles, fuel filters for burners and engines, and many more.
After a period of time, a filter may get clogged and must be cleaned or replaced. It is desirable to detect when the filter starts to get clogged so as to trigger timely cleaning or replacement of the filter.
Many systems for monitoring the condition of a filter are known from the prior art.
For instance, US 7,594,960 B2 discloses a system for monitoring the condition of an air filter. The system includes a mechanical force measuring device arranged on the downstream side of the filter. The filter flexes in response to flow through the filter, thereby exerting a force on the force measuring device, the force increasing with the degree of clogging of the filter.
US 9,120,043 B2 discloses a filter life sensor within an air handling system. The air handling system includes an air flow intake, an air flow exit, and a filter disposed between the air flow intake and the air flow exit. The filter sensor assembly comprises a bypass connecting the air flow intake to the air flow exit, and a dielectric vibration sensor adjacent the bypass. An air flow passing through the bypass causes the frequency and amplitude of the vibration to increase.
US 2006/0259273 A1 discloses a filter monitoring system that employs a differential pressure sensor to provide a continuous signal output proportional to a pressure drop across a filter element. A system that monitors a pressure drop across a filter is also disclosed in WO 2015/078672 A1.
In such monitoring systems, a first pressure port is situated upstream of the filter element, and a second pressure port is situated downstream of the filter element. Particulate matter can therefore enter the differential pressure sensor through the first pressure port and contaminate the differential pressure sensor. This may compromise operation of the differential pressure sensor. The problem is particularly severe with dynamic pressure sensors, i.e., differential pressure sensors that measure differential pressure by monitoring a fluid flow through a sensor channel. Dynamic pressure sensors will quickly become non-functional when particulate matter is allowed to pass through the sensor channel. It may therefore be necessary to employ static differential pressure sensors rather than dynamic differential pressure sensors. However, static differential pressure sensors that are able to detect sufficiently small pressure differences are relatively expensive.

SUMMARY OF THE INVENTION

It is therefore an object of the present invention to provide a filter monitoring system that avoids the above-mentioned problems. In particular, it is an object of the present invention to provide a filter monitoring system that avoids contamination of a differential pressure sensor.
This object is achieved by a filter monitoring system according to claim 1. Further embodiments of the invention are laid down in the dependent claims.
A filter monitoring system for monitoring the condition of a filter is provided, the filter having an upstream side and a downstream side. The filter monitoring system comprises a first differential pressure sensor having a first pressure port and a second pressure port. The first pressure port is configured to be attached in a fluid-tight manner to the downstream side of the filter such that the first pressure port is able to receive a fluid only through the filter. The second pressure port is configured to be arranged downstream of the filter such that the second pressure port is able to exchange a fluid with a region downstream of the filter when the first pressure port is attached to the downstream side of the filter.
By attaching the first pressure port to the downstream side of the filter in a fluid-tight manner, such that the first pressure port is able to receive a fluid only through the filter, the first pressure port is effectively exposed to the pressure upstream of the filter. On the other hand, the second pressure port is exposed to the pressure downstream of the filter. When a fluid flow is passed through the filter, the fluid flow causes a pressure drop across the filter. The first differential pressure sensor will sense a pressure difference that includes this pressure drop or is at least influenced by this pressure drop. By monitoring the differential pressure signal from the first differential pressure sensor, the system can monitor the condition of the filter. Since both pressure ports are arranged downstream of the filter, the first differential pressure sensor is protected from contamination.
The first differential pressure sensor may be a dynamic differential pressure sensor having a sensor channel extending between the first and second pressure ports, the first differential pressure sensor being configured to determine a differential pressure between the first and second pressure ports by measuring a sensor fluid flow through the sensor channel, the sensor fluid flow being caused by the differential pressure. Differential pressure sensors of this type are capable of measuring small pressure differences at low cost. Because the first differential pressure sensor is protected from contamination by the filter, a dynamic differential pressure sensor may be readily employed despite its sensitivity to contamination.

The first pressure port of the first differential pressure sensor is configured to cover a filter portion having a certain cross-sectional area. At its narrowest point, the sensor channel has a certain minimal cross-sectional area. Preferably, the cross-sectional area covered by the first pressure port and the minimal cross-sectional area of the sensor channel have a ratio that is larger than 1, preferably larger than 5. In this manner it is ensured that the flow density of the fluid flow that passes through the filter portion covered by the first pressure port is smaller than the flow density of the fluid flow through the rest of the filter. This in turn ensures that the fluid flow that is to enter the differential pressure sensor experiences a smaller pressure drop by the filter than the fluid flow through the rest of the filter, such that the latter pressure drop is reflected in the reading of the first differential pressure sensor.

In other words, the filter and the differential pressure sensor are configured in such a manner that a fluid flow through the filter at a first flow rate causes a fluid flow through the first differential pressure sensor at a second flow rate. The filter has a first cross-sectional area, and the first pressure port covers a filter portion having a second cross-sectional area. It is then preferred that the ratio of the first flow rate and the first cross-sectional area is larger than the ratio of the second flow rate and the second cross-sectional area, preferably at least by a factor of 5.

The filter monitoring system may comprise a sealing element for attaching the first pressure port of the first differential pressure sensor to the downstream side of the filter in a fluid-tight manner, and/or a biasing element for pressing the first pressure port of the first differential pressure sensor onto the downstream side of the filter.

In preferred embodiments, both the first and second pressure ports of the first differential pressure sensor are configured to be exposed to a stagnation pressure caused by deceleration of a fluid flow that has passed through the filter. In this manner, the influence of the stagnation pressure on the reading of the first differential pressure sensor cancels at least partially, and the reading is influenced predominantly by the difference between the static pressures upstream and downstream of the filter, i.e., by the static pressure drop across the filter.

In some embodiments, this can be achieved by configuring the second pressure port of the first differential pressure sensor to face the downstream side of the filter in such a manner that the second pressure port is exposed to the stagnation pressure caused by the second pressure port itself.

In alternative embodiments, the filter monitoring system may comprise a baffle configured to be arranged downstream from the filter in such a manner that stagnation pressure is created upstream of the baffle when the fluid flow is passed through the filter, and the second pressure port of the first differential pressure sensor may be configured to be arranged upstream of the baffle in such a manner that it is exposed to the stagnation pressure caused by the baffle.

The filter monitoring system may comprise a processing device configured to carry out the following steps:

> operating the first differential pressure sensor to determine a pressure drop indicator indicative of a pressure drop across the filter;
> obtaining a flow rate indicator indicative of a flow rate through the filter;
> determining a contamination indicator that is indicative of a degree of contamination of the filter, based on the pressure drop indicator and the flow rate indicator; and
> optionally, outputting the contamination indicator or a filter status indicator that is based on the contamination indicator.

The processing device may comprise a memory device configured to store calibration data for the contamination indicator. The memory device may be a non-volatile memory device. The calibration data may comprise a filter characteristic that describes an expected dependence of the pressure drop parameter on the flow rate indicator. The processing device may be configured to carry out a normalization operation using the calibration data when determining the contamination indicator.

The processing device may comprise a communication interface, in particular, a wireless communication interface, for outputting the contamination indicator or filter status indicator. The processing device may comprise a disposable or rechargeable battery so as to be autonomous.

The processing device may be configured to evaluate a performance history of the filter. To this end, the processing device may comprise a memory device configured to store a plurality of values of at least one operational parameter indicative of filter operation at different time intervals, in particular, values of at least one of the pressure drop indicator, the flow rate indicator and the contamination indicator. The memory device may be a non-volatile memory device. The processing device may then be configured to carry out the following steps:

> reading, from the memory device, values of the at least one operational parameter associated with a plurality of different time intervals;
> determining a time dependence of said at least one operational parameter or of a variable derived therefrom;

determining a filter status indicator based on said time dependence; and optionally, outputting the filter status indicator.

The filter monitoring device may receive the flow rate indicator from an external source, e.g., from an independent flow rate meter that is arranged elsewhere in the fluid flow, or from a fan controller that controls a fan for creating the fluid flow. In other embodiments, the filter monitoring device may comprise a second differential pressure sensor having a first pressure port and a second pressure port, the second differential pressure sensor being configured to be arranged downstream from the filter in such a manner that a differential pressure between the first and second pressure ports of the second differential pressure sensor is indicative of a dynamic pressure of the fluid flow after it has passed through the filter. Obtaining the flow rate indicator may then comprise:

operating the second differential pressure sensor to determine a dynamic pressure indicator that is indicative of the dynamic pressure; and
using the dynamic pressure indicator or a variable derived therefrom as the flow rate indicator.

A corresponding method of monitoring the condition of a filter is also provided, using a filter monitoring system as described above. The method comprises:

operating the first differential pressure sensor to determine a pressure drop indicator indicative of a pressure drop across the filter;
obtaining a flow rate indicator indicative of a flow rate through the filter; and
determining a contamination indicator, using the pressure drop indicator and the flow rate indicator; and
optionally, outputting the contamination indicator or a filter status indicator that is based on the contamination indicator.

Determining the contamination indicator may comprise:

retrieving calibration data for the contamination indicator, in particular, a filter characteristic that describes an expected dependence of the pressure drop parameter on the flow rate indicator; and
carrying out a normalization operation using the calibration data.

The method may comprise:

storing, in a memory device, a plurality of values of at least one operational parameter indicative of filter operation at different time intervals, in particular, values of at least one of the pressure drop indicator, the flow rate indicator and the contamination indicator;
reading, from the memory device, values of the at least one operational parameter associated with a plurality of different time intervals;
determining a filter status indicator based on a time dependence of said at least one operational parameter; and
optionally, outputting the filter status indicator.

Obtaining the flow rate indicator may comprise:

determining a dynamic pressure indicator that is indicative of a dynamic pressure of a fluid flow through the filter, using a second differential pressure sensor arranged downstream from the filter; and
using the dynamic pressure indicator or a variable derived therefrom as the flow rate indicator.

BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,

Fig. 1     shows, in a highly schematic manner, a filter monitoring system according to the prior art;
Fig. 2     shows, in a highly schematic manner, a filter monitoring system according to a first embodiment of the present invention;
Fig. 3     shows, in a highly schematic manner, a filter monitoring system according to a second embodiment of the present invention;

Fig. 4     shows a highly schematic cross-sectional view of the filter monitoring system of Fig. 3;

Fig. 5     shows, in a highly schematic manner, a filter monitoring system according to a third embodiment of the present invention;

Fig. 6     shows, in a highly schematic manner, a filter monitoring system according to a fourth embodiment of the present invention;

Fig. 7     shows, in a highly schematic manner, a filter monitoring system according to a fifth embodiment of the present invention;

Fig. 8     shows a schematic block diagram of a processing device for deriving a contamination indicator from the signals of two differential pressure sensors;

Fig. 9     shows a diagram illustrating the dependence of the pressure drop over a filter upon the flow rate through the filter for a new filter and for a clogged filter;

Fig. 10     shows a diagram illustrating the dependence of the pressure drop over a filter upon the dynamic pressure of the flow through the filter for a new filter and for a clogged filter; and

Fig. 11     shows a flow diagram illustrating a method according to an embodiment of the present invention.

## DESCRIPTION OF PREFERRED EMBODIMENTS

### Prior-art filter monitoring system

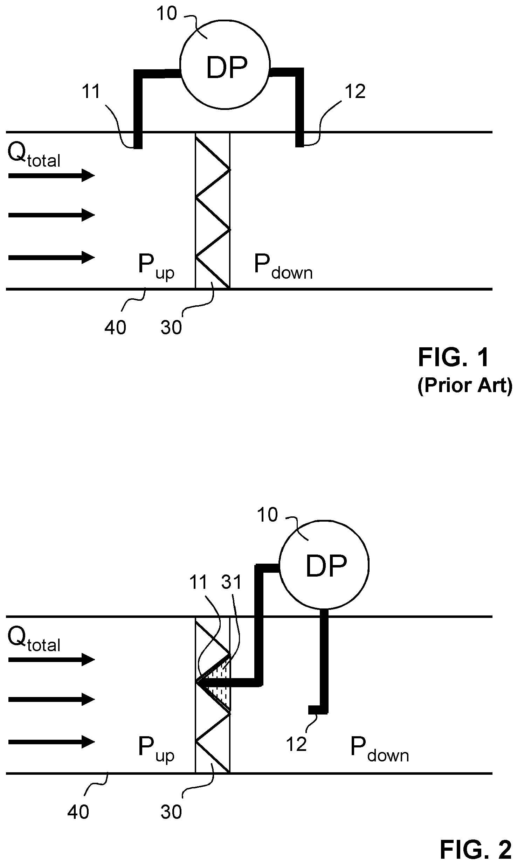

Figure 1 illustrates, in a highly schematic manner, a filter monitoring system according to the prior art. A filter 30 is provided in a duct 40. The perimeter of the filter 30 is attached to the circumferential wall of the duct 40 in a fluid-tight manner, such that a fluid flow (see arrows in Fig. 1) in the duct flows through the filter 30. The filter has a filter membrane that spans the cross-section of the duct to remove particulate matter from the fluid flow. In the present example, the filter is a pleated filter, i.e., its filter membrane is folded into a plurality of pleats in a zig-zag fashion.

A differential pressure (DP) sensor 10 has a first (upstream) pressure port 11 and a second (downstream) pressure port 12. The first pressure port 11 is exposed to the static fluid pressure $P_{up}$ upstream of the filter 30, while the second pressure port 12 is exposed to the static fluid pressure $P_{down}$ downstream of the filter 30. Thereby the differential pressure sensor 10 measures the pressure drop $\Delta P = P_{up} - P_{down}$ across the filter 30.

The pressure drop $\Delta P$ depends, on the one hand, on the flow rate $Q_{total}$ of the fluid flow through the duct 40. On the other hand, for a given flow rate $Q_{total}$, the pressure drop depends on the degree of contamination (soiling) of the filter 30. For a clean filter, the pressure drop will be lower than for a soiled filter. Therefore, if the flow rate $Q_{total}$ is known or kept constant, the degree of contamination of the filter 30 can be monitored by monitoring the pressure drop $\Delta P$.

The prior-art filter monitoring system of Fig. 1 is disadvantageous in that particulate matter can enter the differential pressure sensor 10 through the first pressure port 11 and can thereby compromise operation of the differential pressure sensor 10. As discussed above, this is particularly disadvantageous if the differential pressure sensor 10 is a dynamic pressure sensor.

### Filter monitoring system according to first embodiment

A filter monitoring system according to a first embodiment of the present invention is illustrated, again in a highly schematic manner, in Fig. 2. In contrast to the prior art, the first pressure port 11 is arranged on the downstream side of the filter 30. The first pressure port 11 is attached to the downstream side of the filter membrane in a fluid-tight manner. To this end, a sealing element 31 is provided. Fluid can be exchanged between the first pressure port 11 and the space inside the duct 40 only through the filter membrane, i.e., the first pressure port 11 can exchange fluid only with the duct region upstream of the filter 30. The second pressure port 12 is also arranged downstream of the filter 30. Like the first pressure port 11, also the second pressure port 12 is oriented to face the downstream side of the filter membrane. However, it is not attached to the filter membrane in a fluid-tight manner. Therefore fluid can be directly exchanged between the second pressure port 12 and the duct region downstream from the filter 30.

The flow rate through the differential pressure sensor 10 is generally negligibly small. This small flow will cause only a negligible pressure drop at the filter membrane before it enters the first pressure port 11. The pressure to which the first pressure port 11 is exposed therefore essentially corresponds to the static pressure $P_{up}$ upstream of the filter,

$$P_{dyn} = \frac{1}{2}\rho v^2$$

plus the dynamic pressure (velocity pressure) of the fluid flow that is converted into stagnation pressure at the first pressure port 11 by the fluid flow essentially being brought to a complete halt by the first pressure port 11. Here, $\rho$ designates the mass density of the fluid, and $v$ designates the flow velocity.

On the other hand, the second pressure port 12 is exposed to the static pressure $P_{down}$ downstream of the filter, plus the dynamic pressure converted into stagnation pressure by the fluid flow essentially being brought to a complete halt by the second pressure port 12. Since the flow velocities upstream and downstream of the filter 30 are approximately equal, dynamic pressure is essentially the same upstream and downstream of the filter.

Therefore, the following equations hold to a good approximation:

$$P_1 = P_{up} + P_{dyn} \, ,$$

$$P_2 = P_{down} + P_{dyn} \, ,$$

$$P_1 - P_2 = (P_{up} + P_{dyn}) - (P_{down} + P_{dyn}) = P_{up} - P_{down} = \Delta P \, .$$

Here, $P_1$ designates the total pressure inside the first pressure port 11, and $P_2$ designates the total pressure inside the second pressure port 12.

These considerations show that, to a good approximation, the differential pressure sensor 10 measures the pressure drop $\Delta P$ across the filter, even through both pressure ports 11, 12 of the differential pressure sensor 10 are located at the downstream side of the filter 30.

The differential pressure sensor 10 may be a dynamic differential pressure sensor, i.e., a differential pressure sensor that has a sensor channel extending between the first and second pressure ports 11, 12. A dynamic differential pressure sensor determines a differential pressure between the first and second pressure ports based on a fluid flow through the sensor channel that is caused by the differential pressure. Because both first pressure ports are arranged downstream from the filter membrane, the differential pressure sensor is protected from contamination by particulate matter that may be present upstream of the filter 30.

Filter monitoring system according to second embodiment

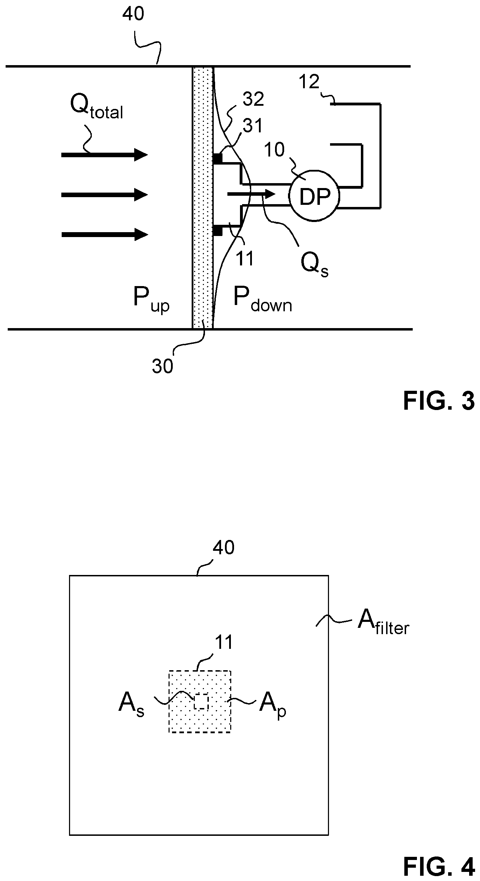

A filter monitoring system according to a second embodiment of the present invention is illustrated, again in a highly schematic manner, in Fig. 3. In contrast to the first embodiment, which comprises a pleated filter, the filter 30 of the second embodiment is a flat filter having an essentially flat surface at its downstream side. Accordingly, a different type of sealing element 31 is employed (see discussion below). Otherwise, the second embodiment is equivalent to the first embodiment.

Dimensional considerations

Some dimensional considerations will now be explained with reference to Figs. 3 and 4.

The fluid flow through the duct 40 (and therefore through the filter 30) has a total flow rate $Q_{total}$. This fluid flow causes a fluid flow through the sensor channel of the differential pressure sensor 10 at a sensor flow rate $Q_s$. Generally, the sensor flow rate $Q_s$ should be much smaller than the total flow rate $Q_{total}$:

$$Q_s \ll Q_{total}.$$

As illustrated in Fig. 4, the filter membrane has a cross-sectional area $A_{filter}$. The first pressure port 11 covers an area $A_p$ of the filter membrane. The sensor channel of the differential pressure channel has, at its narrowest point, a minimal cross-sectional area $A_s$.

In order to ensure that the sensor flow rate $Q_s$ is always much smaller than the total flow rate $Q_{total}$, the flow resistance R = $\delta P / \delta Q$ of the system to the sensor flow should be much larger than its flow resistance to the remainder of the flow. This will generally be the case if the minimal cross-sectional area $A_s$ of the sensor channel is much smaller than the total cross-sectional area $A_{filter}$ of the filter membrane, e.g., by at least a factor of 100:

$$A_s \ll A_{filter}.$$

In order to ensure that the first pressure port does not significantly increase the flow resistance of the system to the overall flow, the membrane area covered by the first pressure port 11 should be much smaller than the total cross-sectional area of the filter, preferably by at least a factor of 10:

$$A_p \ll A_{filter}.$$

In order to ensure that the sensor flow can enter the differential pressure sensor without experiencing a significant pressure drop at the filter membrane, even if the filter membrane is soiled, the membrane area $A_p$ that is covered by the first pressure port should be comparatively large, in particular, larger than the minimal cross-sectional area $A_s$ of the sensor channel, preferably by at least a factor of 5:

$$A_p > A_s.$$

In this manner it can be ensured that the flow density through the membrane area covered by the first pressure port 11 is much smaller than the total flow density through the filter, such that the flow resistance of the filter membrane to the sensor flow becomes comparatively small:

$$\frac{Q_s}{A_p} \ll \frac{Q_{total}}{A_{filter}}.$$

Attaching the first pressure port to the filter membrane

As discussed above, the first pressure port is attached to the filter membrane in a fluid-tight manner. This can be achieved in a variety of ways. For instance, the first pressure port may be pressed onto the filter membrane by one or more spring elements for biasing the first pressure port towards the filter. One such spring element 32 is schematically illustrated in Fig. 3.

A sealing element 31 may aid in establishing a fluid-tight connection between the first pressure port and the filter membrane. Its design generally depends on the construction of the filter. For instance, in the case of a pleated filter, as schematically illustrated in Fig. 2, the sealing element 31 may be an adapter made of a plastic material, the adapter having a bore for receiving the first pressure port 11 and having a shape that causes the adapter to tightly fit between two pleats of the filter. The adapter may be held between the pleats by simply placing the adapter between the pleats, or it may be held in place by a spring element or by an adhesive. In the case of a flat filter, the sealing element 31 may simply be an O-ring. Many other embodiments of a sealing element are conceivable, and the present invention is not limited in any way to a particular type of sealing element.

It is also conceivable to directly attach the first pressure port to the filter membrane with an adhesive. In this case, the remainder of the differential pressure sensor may be detachably connected to the first pressure port, such that the filter can be discarded together with the first pressure port without discarding the entire differential pressure sensor.

As will have become apparent, there are many conceivable manners of attaching the first pressure port to the filter membrane in a fluid-tight manner, and the present invention is not limited to any particular one of these.

It should be noted that the first and second pressure ports 11, 12 may be remote from any sensing elements of the differential pressure sensor 10 and may be connected to such sensing element via suitable tubing.

Filter monitoring system according to third embodiment

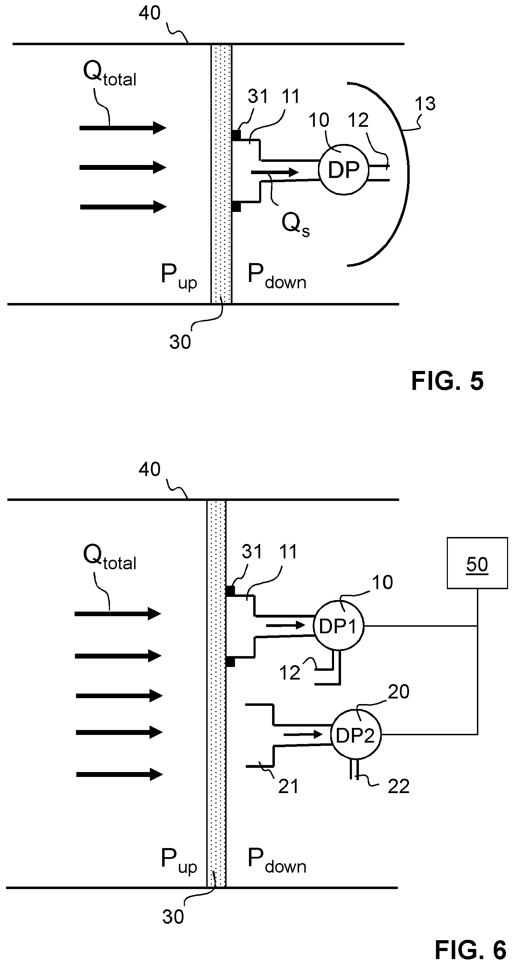

A filter monitoring system according to a third embodiment of the present invention is illustrated, again in a highly schematic manner, in Fig. 5. In contrast to the first and second embodiments, the second sensor port 12 is not oriented to face the downstream side of the filter 30. Instead, a baffle 13 is provided downstream of the filter 30. The baffle 13 brings the fluid flow that hits the baffle essentially to a complete halt. Thereby it causes dynamic pressure of the fluid flow to be converted into stagnation pressure upstream of the baffle. The second sensor port 12 is arranged closely upstream of the baffle 13 and faces the baffle so as to be exposed to the stagnation pressure caused by the baffle.

Filter monitoring system according to fourth embodiment

A filter monitoring system according to a fourth embodiment of the present invention is illustrated, again in a highly schematic manner, in Fig. 6. The filter monitoring system of this embodiment comprises a second differential pressure sensor 20 in addition to the first differential pressure sensor 10. The first pressure port 21 of the second differential pressure sensor 20 faces the filter membrane at a distance. It is therefore exposed to the static pressure $P_{down}$ downstream of the filter plus a stagnation pressure caused by the fluid flow essentially being brought to a halt by the first pressure port 21, which corresponds to the dynamic pressure $P_{dyn}$ of the fluid flow. The second pressure port 22 is directed away from the filter membrane and therefore is exposed only to the static pressure $P_{down}$ without being exposed to a stagnation pressure.

The second differential pressure sensor 20 therefore measures the dynamic pressure $P_{dyn}$ of the fluid flow. From the dynamic pressure, the flow velocity or flow rate of the total fluid flow $Q_{total}$ downstream of the filter can be estimated. The dynamic pressure $P_{dyn}$ thus acts as a flow rate indicator that is indicative of the flow rate $Q_{total}$. The flow rate indicator $P_{dyn}$ can be related to the pressure drop $\Delta P$ that is determined by the first differential pressure sensor.

A processing device 50 receives signals from both differential pressure sensors 10 and 20 and correlates these signals, as will be explained in more detail below.

The first and second differential pressure sensors 10, 20 may be implemented in a common housing and even on a common substrate.

## Filter monitoring system according to fifth embodiment

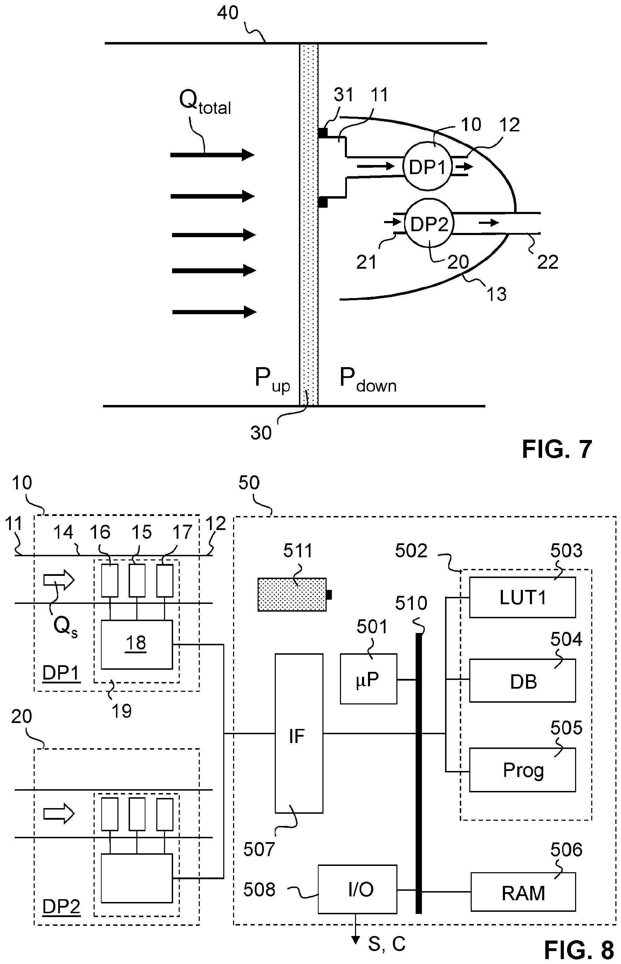

A filter monitoring system according to a fifth embodiment of the present invention is illustrated, again in a highly schematic manner, in Fig. 7. In this embodiment, a baffle 13 is used, similar to the third embodiment.

## Exemplary configuration of processing device

Figure 8 shows a highly schematic block diagram of two differential pressure sensors 10, 20 together with a processing device 50.

Differential pressure sensors 10, 20 are configured as dynamic differential pressure sensors. Differential pressure sensor 10 comprises a sensor channel 14 for guiding the sensor flow $Q_s$ between the first and second pressure ports 11, 12. A microthermal sensor element 19 is arranged in the sensor channel such that the sensor flow passes over the microthermal sensor element. The microthermal sensor element comprises a heater element 15, a first temperature sensor 16 upstream from the heater element 15, and a second temperature sensor 17 downstream from the heater element 15 with respect to the sensor flow. For determining a flow rate through the sensor channel, power is applied to the heater element 15, and the temperature difference between the first and second temperature sensors 16, 17 is determined. For given heater power, the stationary-state temperature difference is indicative of the flow rate through the sensor channel. Since the flow rate depends on the pressure difference between the first and second pressure ports 11, 12, the temperature difference between the first and second temperature sensors 16, 17 is also indicative of the pressure difference between these ports. The differential pressure sensor may further comprise an additional temperature sensor for measuring the temperature of the fluid when it enters the differential pressure sensor, in order to take into account the temperature dependence of the viscosity of the fluid. Control circuitry 18 is provided for supplying a current to the heater element 17 and for processing temperature signals from the temperature sensors. The control circuitry 18 may be integrated on a common substrate together with the heater element 15 and the temperature sensors 17, 18, e.g., in CMOS technology. For a possible setup and mode of operation of the microthermal sensor element, reference is made to EP1426740A2.

The second differential pressure sensor 20 has the same setup as the first differential pressure sensor.

The processing device 50 comprises a processor ($\mu$P) 501, a non-volatile memory 502, and a volatile (RAM) memory 506. The processor $\mu$P communicates with the memory devices 502, 506 via a bus 510. The non-volatile memory 502 stores, inter alia, at least one lookup table LUT1 in a memory area 503. The lookup table LUT1 may comprise calibration data that are representative of the flow characteristics of the filter 30. The non-volatile memory 502 further comprises a database DB in a memory area 504 that contains values of one or more operational parameters that have been measured for different time intervals in the past. The non-volatile memory 502 further stores a machine-executable program in a memory area 505 for execution in the processor $\mu$P. The program causes the processor to operate the first and second differential pressure sensors 10, 20 to determine a pressure drop indicator indicative of the pressure drop across the filter and a flow rate indicator indicative of the dynamic pressure caused by the flow through the filter, and to calculate a contamination indicator from these signals (see below). Via a device interface IF 507, the processing circuitry communicates with the first and second differential pressure sensors 10, 20. A communication interface I/O 508 enables communication to the outside world. The communication interface 508 may implement at least one wireless communication protocol such as WiFi, Bluetooth, NFC etc. for communicating without a wired connection. A disposable or rechargeable battery 511 provides electrical energy for the processing circuitry. In this manner, the filter monitoring device can be operated in a fully autonomous manner.

## Determining a contamination indicator

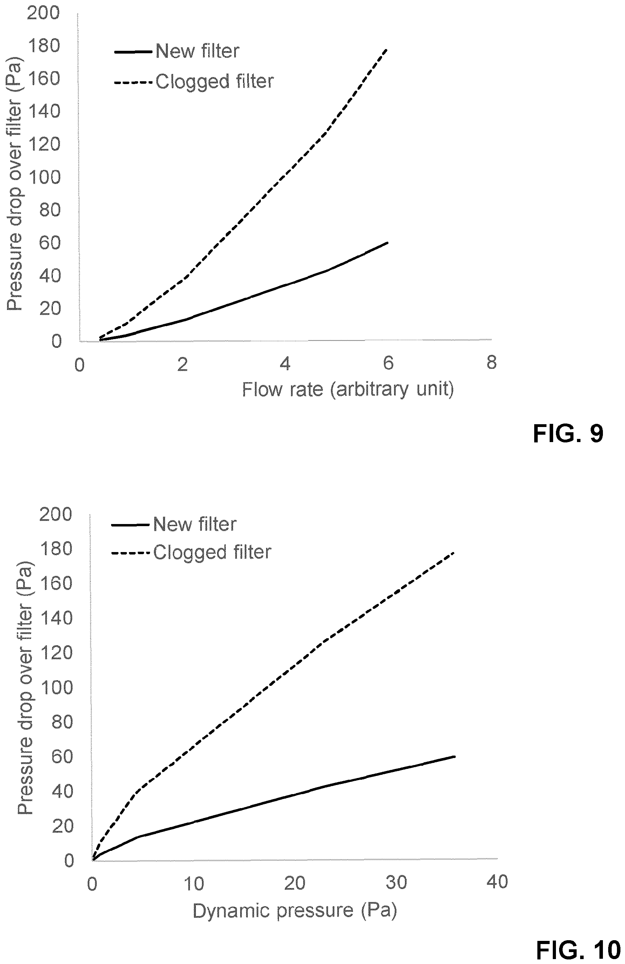

The condition of the filter can be estimated by relating the pressure drop $\Delta P$ across the filter to the flow rate $Q_{total}$. This is illustrated in Fig. 9, which is a diagram illustrating the dependence of pressure drop $\Delta P$ on flow rate $Q_{total}$.

Two curves are shown, one curve for a new, clean filter and the other curve for a soiled and almost clogged filter. For a new, clean filter, the slope of the curve is much smaller than for a clogged filter.

Instead of relating the pressure drop $\Delta P$ to the flow rate $Q_{total}$, the pressure drop can also be related to the dynamic pressure $P_{dyn}$, which is closely related to the flow rate $Q_{total}$. The dependence of pressure drop $\Delta P$ on dynamic pressure $P_{dyn}$ is shown in Fig. 10. Again, the curve for a clean filter has a much smaller slope than the curve for a clogged filter.

The dependence of pressure drop on dynamic pressure can be approximately linearized. This can be done by determining the filter characteristics of a clean filter, e.g., by carrying out a calibration measurement of pressure drop at various values of dynamic pressure using a clean filter and storing these pressure drop values as calibration values, e.g., in lookup table LUT1. Each measured pressure drop value may then be divided by the corresponding (possibly interpolated) value of the calibration measurement to obtain a normalized pressure drop value. The normalized pressure drop values will be approximately independent of dynamic pressure.

The normalized pressure drop value may be used as contamination indicator C. Increasing values of the contamination indicator C indicate increasing degrees of contamination.

If the total flow rate $Q_{total}$, the flow velocity or a related parameter is known from some other source than from a measurement of dynamic pressure, the above-described procedure can be adapted accordingly.

Of course, a contamination indicator may be determined also in another manner, based on a flow rate indicator and a pressure drop indicator.

The contamination indicator C may be outputted via the communication interface 508, and/or it may be stored in the database DB in memory area 504.

Determining a status indicator based on performance history

Values of operational parameters of the filter monitoring system that have been obtained at different time intervals may be stored in a database, e.g., database DB of processing device 50, or an external database. The performance history of the filter may be evaluated using the values in the database, and a filter status indicator may be derived from the performance history.

The operational parameters in the database may include, in particular, one or more parameters that are indicative of filter performance. For instance, the operational parameters can include the pressure drop indicator and/or the contamination indicator C. The database may further store additional operational parameters, which are not necessarily directly related to filter performance, but which may be useful for evaluating filter performance, e.g., the flow rate indicator and/or the environmental temperature.

The performance history may be evaluated by retrieving, from the database, a plurality of values of the operational parameters, these values being associated with a plurality of different time intervals, and comparing these values to expected values. For instance, the contamination indicator may be retrieved from the database for multiple time intervals.

If the contamination indicator exceeds a threshold for one or more time intervals, a filter status indicator S indicating increased soiling may be generated.

If the contamination indicator exhibits a rapid rise over a short period of time, a filter status indicator $S$ in the form of a warning signal indicating the onset of clogging may be generated.

If the contamination indicator has exceeded the threshold for one or more time intervals, and if the flow rate indicator indicates an unexpected fall of the flow rate, a filter status indicator $S$ in the form of an error signal indicating complete clogging may be generated.

If the contamination indicator indicates an unexpected fall of the contamination signal over a short period of time, this might indicate rupturing of the filter, and a filter status indicator $S$ in the form of a corresponding error signal may be generated.

The filter status indicator $S$ may be outputted through the communication interface 508.

Of course, many other types of filter status indicators are conceivable.

Flow diagram of exemplary method

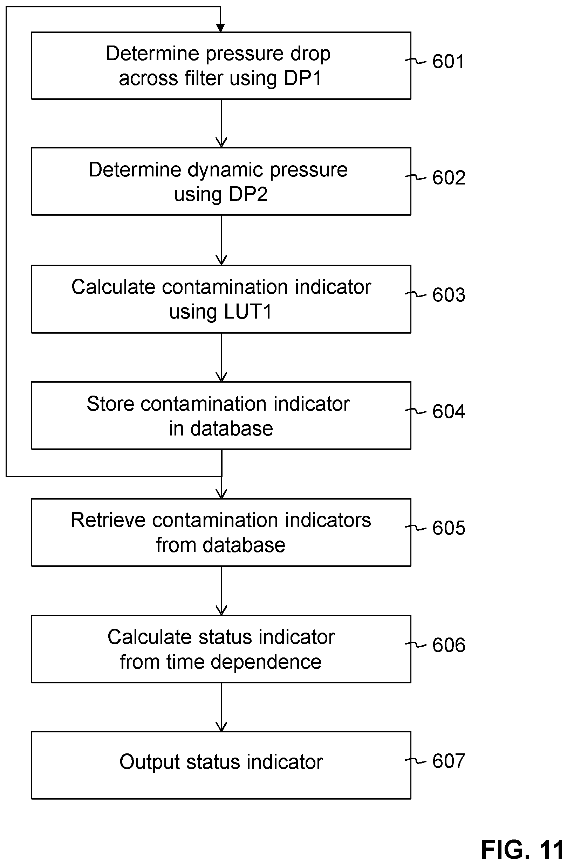

Figure 11 shows a flow diagram illustrating a method according to an embodiment of the present invention.

In step 601, the processing device 50 operates the first differential pressure sensor 10 to determine a pressure drop indicator.

In step 602, the processing device 50 operates the second differential pressure 20 to determine a flow rate indicator in the form of dynamic pressure.

In step 603, the processing device 50 calculates the contamination indicator C, using the pressure drop indicator, the flow rate indicator and the lookup table LUT1 in memory 502.

In step 604, the processing device 50 stores the contamination indicator C and the associated time interval in a database.

Steps 601 to 604 are repeated periodically.

In step 605, values of the contamination indicator C associated with different time intervals are retrieved from the database.

In step 606, a status indicator $S$ is calculated from the time dependence of the values of the contamination indicator.

In step 607, the status indicator $S$ is outputted through the communication interface 508.

While embodiments of the invention have been described with reference to the drawings, the invention is not limited to these embodiment, and various modifications are possible.

LIST OF REFERENCE SIGNS

| | | | |
|---|---|---|---|
| 10 | differential pressure sensor | 503 | memory for lookup table |
| 11 | first pressure port | 504 | memory for database |
| 12 | second pressure port | 505 | program memory |
| 13 | baffle | 506 | RAM |
| 14 | sensor channel | 507 | device interface |
| 15 | heater element | 508 | communication interface |
| 16, 17 | temperature sensors | 510 | bus |
| 18 | control circuitry | 511 | battery |
| 19 | sensor element | | |
| 20 | differential pressure sensor | $P_{up}$ | upstream pressure |
| 21 | first pressure port | $P_{down}$ | downstream pressure |
| 22 | second pressure port | $Q_{total}$ | total mass flow rate |
| 30 | filter element | $Q_s$ | sensor mass flow rate |
| 31 | sealing element | $A_{filter}$ | cross-sectional area of filter |
| 40 | duct | $A_s$ | cross-sectional area of first |
| 50 | processing device | | pressure port |
| 501 | processor | $S$ | status indicator |
| 502 | non-volatile memory | | |

**Claims**

1. A filter monitoring system for monitoring the condition of a filter (30), having an upstream side and a downstream side,

   the filter monitoring system comprising a first differential pressure sensor (10) having a first pressure port (11) and a second pressure port (12),
   wherein the first pressure port (11) is configured to be attached in a fluid-tight manner to the downstream side of the filter (30) such that the first pressure port (11) is able to receive a fluid only through the filter (30); and
   wherein the second pressure port (12) is configured to be arranged downstream of the filter (30) such that the second pressure port (12) is able to exchange a fluid with a region downstream of the filter (30) when the first pressure port (11) is attached to the downstream side of the filter (30).

2. The filter monitoring system of claim 1, wherein the first differential pressure sensor (10) is a dynamic differential pressure sensor having a sensor channel (14) extending between the first and second pressure ports (11, 12), the first differential pressure sensor (10) being configured to determine a differential pressure between the first and second pressure ports (11, 12) by measuring a sensor fluid flow through the sensor channel (14), the sensor fluid flow being caused by the differential pressure.

3. The filter monitoring system of claim 2,

   wherein the first pressure port (11) of the first differential pressure sensor (10) is configured to cover a filter portion having a covered cross-sectional area ($A_p$);

wherein the sensor channel (14) has a minimal cross-sectional area ($A_s$); and

wherein the covered cross-sectional area ($A_p$) and the minimal cross-sectional area ($A_s$) have a ratio that is larger than 1, preferably larger than 5.

4. The filter monitoring system any one of the preceding claims, comprising:

a sealing element (31) for attaching the first pressure port (11) of the first differential pressure sensor (10) to the downstream side of the filter (30) in a fluid-tight manner; and/or

a biasing element (32) for pressing the first pressure port (11) of the first differential pressure sensor (10) onto the downstream side of the filter (30).

5. The filter monitoring system of any one of the preceding claims, wherein both the first and second pressure ports (11, 12) of the first differential pressure sensor (10) are configured to be exposed to a stagnation pressure caused by a fluid flow being decelerated after having passed through the filter (30).

6. The filter monitoring system of claim 5, wherein the second pressure port (12) of the first differential pressure sensor (10) is configured to face the downstream side of the filter (30) in such a manner that the second pressure port (12) is exposed to the stagnation pressure caused by the second pressure port (12) itself.

7. The filter monitoring system of claim 5,

comprising a baffle (13) configured to be arranged downstream from the filter (30) in such a manner that stagnation pressure is created upstream of the baffle (13) when the fluid flow is passed through the filter (30), wherein the second pressure port (12) of the first differential pressure sensor (10) is configured to be arranged upstream of the baffle (13) in such a manner that it is exposed to the stagnation pressure caused by the baffle (13).

8. The filter monitoring system of any one of the preceding claims, comprising a processing device (50) configured to carry out the following steps:

operating the first differential pressure sensor (10) to determine a pressure drop indicator indicative of a pressure drop across the filter (30);

obtaining a flow rate indicator indicative of a flow rate ($Q_{total}$) of a fluid flow through the filter (30);

determining a contamination indicator (C) that is indicative of a degree of contamination of the filter (30), using the pressure drop indicator and the flow rate indicator; and

optionally, outputting the contamination indicator (C) or a filter status indicator (S) that is based on the contamination indicator (C).

9. The filter monitoring system of claim 8,

wherein the processing device (50) comprises a memory device (503) configured to store calibration data (LUT1) for the contamination indicator, and

wherein the processing device (50) is configured to carry out a normalization operation using the calibration data (LUT1) when determining the contamination indicator (C).

10. The filter monitoring system of claim 8 or 9,

wherein the processing device (50) comprises a memory device (504) configured to store a plurality of values of at least one operational parameter indicative of filter operation at different time intervals, in particular, values of at least one of the pressure drop indicator, the flow rate indicator and the contamination indicator (C), and

wherein the processing device (50) is configured to carry out the following steps:

reading, from the memory device (504), values of the at least one operational parameter associated with a plurality of different time intervals;

determining a time dependence of said at least one operational parameter or of a variable derived therefrom;

determining a filter status indicator (S) based on said time dependence; and

optionally, outputting the filter status indicator (S).

11. The filter monitoring device of any one of claims 7 to 10,

comprising a second differential pressure sensor (20) having a first pressure port (21) and a second pressure port (22), the second differential pressure sensor (20) being configured to be arranged downstream from the filter (30) in such a manner that a differential pressure between the first and second pressure ports (21, 22) of the second differential pressure sensor (20) is indicative of a dynamic pressure of the fluid flow ($Q_{total}$) after it has passed through the filter (30),

wherein obtaining the flow rate indicator comprises:

operating the second differential pressure sensor (20) to determine a dynamic pressure indicator that is indicative of the dynamic pressure; and

using the dynamic pressure indicator or a variable derived therefrom as the flow rate indicator.

12. The filter monitoring system of any one of the preceding claims, further comprising the filter (30), the filter (30) being arranged to receive a fluid flow that passes through the filter (30) from its upstream side to its downstream side, the first pressure port (11) of the first differential pressure sensor (10) being connected in a fluid-tight manner to the downstream side of the filter (30), and the second pressure port (12) of the first differential pressure sensor (10) being arranged downstream from the filter (30) without being connected to the filter (30) in a fluid-tight manner.

13. A method of monitoring the condition of a filter (30) having an upstream side and a downstream side, using a filter monitoring system that comprises a first differential pressure sensor (10) having a first pressure port (11) that is connected in a fluid-tight manner to the downstream side of the filter (30), and having a second pressure port (12) that is arranged downstream from the filter (30) without being connected to the filter (30) in a fluid-tight manner, the method comprising:

operating the first differential pressure sensor (10) to determine a pressure drop indicator indicative of a pressure drop across the filter (30);

obtaining a flow rate indicator indicative of a flow rate ($Q_{total}$) through the filter (30); and

determining a contamination indicator (C), using the pressure drop indicator and the flow rate indicator; and

optionally, outputting the contamination indicator (C) or a filter status indicator (S) that is based on the contamination indicator (C).

14. The method of claim 13, comprising:

storing, in a memory device (504), a plurality of values of at least one operational parameter indicative of filter operation at different time intervals, in particular, values of at least one of the pressure drop indicator, the flow rate indicator and the contamination indicator (S);

reading, from the memory device (504), values of the at least one operational parameter associated with a plurality of different time intervals;

determining a filter status indicator (S) based on a time dependence of said at least one operational parameter; and

optionally, outputting the filter status indicator (S).

15. The method of claim 13 or 14, wherein obtaining the flow rate indicator comprises:

determining a dynamic pressure indicator that is indicative of a dynamic pressure of a fluid flow ($Q_{total}$) through the filter (30), using a second differential pressure sensor (20) arranged downstream from the filter (30); and

using the dynamic pressure indicator or a variable derived therefrom as the flow rate indicator.

**FIG. 1**
**(Prior Art)**

**FIG. 2**

**FIG. 3**

**FIG. 4**

FIG. 5

FIG. 6

**FIG. 7**

**FIG. 8**

FIG. 9

FIG. 10

```
┌─────────────────────────────────┐
│   Determine pressure drop       │──── 601
│   across filter using DP1       │
└─────────────────────────────────┘
                │
                ▼
┌─────────────────────────────────┐
│   Determine dynamic pressure    │──── 602
│   using DP2                     │
└─────────────────────────────────┘
                │
                ▼
┌─────────────────────────────────┐
│   Calculate contamination indicator │──── 603
│   using LUT1                    │
└─────────────────────────────────┘
                │
                ▼
┌─────────────────────────────────┐
│   Store contamination indicator │──── 604
│   in database                   │
└─────────────────────────────────┘
                │
                ▼
┌─────────────────────────────────┐
│   Retrieve contamination indicators │──── 605
│   from database                 │
└─────────────────────────────────┘
                │
                ▼
┌─────────────────────────────────┐
│   Calculate status indicator    │──── 606
│   from time dependence          │
└─────────────────────────────────┘
                │
                ▼
┌─────────────────────────────────┐
│   Output status indicator       │──── 607
└─────────────────────────────────┘
```

**FIG. 11**

Europäisches
Patentamt

European
Patent Office

Office européen
des brevets

# EUROPEAN SEARCH REPORT

Application Number

EP 20 16 5226

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 205 156 A (ASANO HIDEO [JP] ET AL) 27 April 1993 (1993-04-27) * the whole document * | 1,4-8, 11-13,15 | INV. B01D35/143 B01D46/00 |
| X | EP 1 285 686 A1 (FREUDENBERG CARL KG [DE]) 26 February 2003 (2003-02-26) * paragraph [0013] - paragraph [0016]; figure 3 * | 1-5,8,9, 13 | |
| X | WO 88/01050 A1 (ALERT FILTER CORP [US]) 11 February 1988 (1988-02-11) * the whole document * | 1-6,12, 13 | |
| X | WO 2018/031403 A1 (3M INNOVATIVE PROPERTIES CO [US]) 15 February 2018 (2018-02-15) * paragraph [0074] - paragraph [0077]; figure 10 * | 1,4, 8-10, 12-14 | |
| X | WO 2015/187392 A1 (CLEANALERT LLC [US]) 10 December 2015 (2015-12-10) * paragraph [0025] - paragraph [0027]; figure 1 * | 1,2,13 | TECHNICAL FIELDS SEARCHED (IPC) B01D |
| X | US 5 429 649 A (ROBIN ROGER C [FR]) 4 July 1995 (1995-07-04) * the whole document * | 1,2,13 | |

The present search report has been drawn up for all claims

| Place of search | Date of completion of the search | Examiner |
|---|---|---|
| Munich | 22 July 2020 | Marti, Pedro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 20 16 5226

This annex lists the patent family members relating to the patent documents cited in the above-mentioned European search report.
The members are as contained in the European Patent Office EDP file on
The European Patent Office is in no way liable for these particulars which are merely given for the purpose of information.

22-07-2020

| Patent document cited in search report | | Publication date | Patent family member(s) | | Publication date |
|---|---|---|---|---|---|
| US 5205156 | A | 27-04-1993 | DE | 4137520 A1 | 21-05-1992 |
| | | | GB | 2250452 A | 10-06-1992 |
| | | | JP | H054014 A | 14-01-1993 |
| | | | JP | 3132092 B2 | 05-02-2001 |
| | | | US | 5205156 A | 27-04-1993 |
| EP 1285686 | A1 | 26-02-2003 | BR | 0203266 A | 27-05-2003 |
| | | | CZ | 20022406 A3 | 16-04-2003 |
| | | | DE | 10140510 A1 | 13-03-2003 |
| | | | EP | 1285686 A1 | 26-02-2003 |
| | | | JP | 2003071225 A | 11-03-2003 |
| | | | KR | 20030016174 A | 26-02-2003 |
| | | | PL | 355522 A1 | 24-02-2003 |
| | | | US | 2003052791 A1 | 20-03-2003 |
| WO 8801050 | A1 | 11-02-1988 | AU | 7391387 A | 24-02-1988 |
| | | | CN | 87105271 A | 13-04-1988 |
| | | | GB | 2193575 A | 10-02-1988 |
| | | | KR | 880002563 A | 09-05-1988 |
| | | | US | 4747364 A | 31-05-1988 |
| | | | WO | 8801050 A1 | 11-02-1988 |
| WO 2018031403 | A1 | 15-02-2018 | CA | 3033069 A1 | 15-02-2018 |
| | | | CA | 3033494 A1 | 15-02-2018 |
| | | | CN | 109564020 A | 02-04-2019 |
| | | | CN | 109937080 A | 25-06-2019 |
| | | | EP | 3496837 A1 | 19-06-2019 |
| | | | EP | 3497379 A1 | 19-06-2019 |
| | | | JP | 2019530563 A | 24-10-2019 |
| | | | JP | 2019532263 A | 07-11-2019 |
| | | | KR | 20190028790 A | 19-03-2019 |
| | | | KR | 20190037274 A | 05-04-2019 |
| | | | TW | 201808433 A | 16-03-2018 |
| | | | TW | 201819024 A | 01-06-2018 |
| | | | US | 2018140989 A1 | 24-05-2018 |
| | | | US | 2019262756 A1 | 29-08-2019 |
| | | | US | 2019291037 A1 | 26-09-2019 |
| | | | WO | 2018031403 A1 | 15-02-2018 |
| | | | WO | 2018031406 A1 | 15-02-2018 |
| WO 2015187392 | A1 | 10-12-2015 | CA | 2950289 A1 | 10-12-2015 |
| | | | WO | 2015187392 A1 | 10-12-2015 |
| US 5429649 | A | 04-07-1995 | DE | 69300790 T2 | 11-07-1996 |
| | | | EP | 0566479 A1 | 20-10-1993 |
| | | | JP | H0671124 A | 15-03-1994 |

EPO FORM P0459

For more details about this annex : see Official Journal of the European Patent Office, No. 12/82

page 1 of 2

**ANNEX TO THE EUROPEAN SEARCH REPORT
ON EUROPEAN PATENT APPLICATION NO.**

EP 20 16 5226

This annex lists the patent family members relating to the patent documents cited in the above-mentioned European search report.
The members are as contained in the European Patent Office EDP file on
The European Patent Office is in no way liable for these particulars which are merely given for the purpose of information.

22-07-2020

| Patent document cited in search report | Publication date | Patent family member(s) | Publication date |
|---|---|---|---|
| | | US 5429649 A | 04-07-1995 |

For more details about this annex : see Official Journal of the European Patent Office, No. 12/82

EPO FORM P0459

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7594960 B2
- US 9120043 B2
- US 20060259273 A1
- WO 2015078672 A1
- EP 1426740 A2